# EUROPÄISCHE PATENTANMELDUNG

(11) **EP 1 585 208 A2**
(43) Veröffentlichungstag der Anmeldung: **12.10.2005**
(21) Anmeldenummer: 05004042.7
(22) Anmeldetag: 24.02.2005
(51) Int. Cl.: H02K 1/14

(54) **Statorkörper für einen mehrphasigen Elektromotor**

(30) Priorität: 05.04.2004 DE 102004016743
(71) Anmelder: MINEBEA Co., Ltd., Nagano-ken 3849-2100 (JP)
(72) Erfinder: Gummcih, Markus, 78052 VS-Pfaffenweiler (DE)
(74) Vertreter: Liesegang, Eva

(57) **Zusammenfassung**

Die Erfindung betrifft eine Statoranordnung für einen mehrphasigen Elektromotor, insbesondere einen Innenläufermotor, umfassend einen Träger und mehrere separate Polschuhkörper, wobei jeder Polschuhkörper jeweils nur Polschuhe einer Phase des Elektromotors umfaßt, und wobei die Polschuhkörper an dem Träger derart angebracht sind, daß die einzelnen Polschuhkörper magnetisch voneinander getrennt sind.

## Beschreibung

Die Erfindung betrifft eine Statoranordnung für einen mehrphasigen Elektromotor.

Ein Hauptanwendungsgebiet der Erfindung ist das Gebiet der bürstenlosen Gleichstrommotoren und anderer Elektromotoren, wie Permanentmagnetmotoren, die als Innenläufermotoren oder Außenläufermotoren konfiguriert sind. Die Erfindung ist jedoch ohne Beschränkung hierauf allgemein auf jede Art von Elektromotor oder Generator anwendbar.

Elektromotoren mit einer Innenläuferkonfiguration weisen eine Rotoranordnung auf, die auf eine Motorwelle aufgebracht ist und einen oder mehrere Magnete umfaßt, sowie eine Statoranordnung aus z.B. einer Anzahl von paketierten Metallblechen, die einen ringförmigen Statorrückschluß und von dem Statorrückschluß nach innen abstehende Polschuhe aufweisen. Auf die Polschuhe sind Phasenwicklungen aufgebracht. Die Rotoranordnung ist koaxial in die Statoranordnung eingefügt. Bei einer Außenläuferkonfiguration umgibt der Rotor den Stator koaxial.

Bei bekannten Innenläufermotor-Konfigurationen besteht die Schwierigkeit, daß das Bewickeln der innenliegenden Polschuhe des Stators nicht unkompliziert ist. Im Stand der Technik wurden hierzu sogenannte Nadelwickler entwickelt, welche den Spulendraht mit einer Nadel durch die zwischen den Polschuhen, respektive Hämmern, liegenden Nuten führen. Diese Nadelwickler erreichen eine gute Drahtführung sowie einen ausgezeichneten Füllfaktor, sie sind jedoch technisch aufwendig und relativ langsam. Insbesondere bei kleinen Innenläufermotoren ist die Bewicklung der Statoren höchst diffizil, und die heute bekannte Nadelwickler sind auf ein Innendurchmesser des Stators von 5 mm begrenzt.

Im Stand der Technik wurden daher Statoranordnungen entwickelt, die einen mehrteiligen Polschuhkörper umfassen, der einen Statorrückschluß und einzelne daran befestigte Polschuhe aufweist. Bei solchen mehrteiligen Statoren wird jeder Polschuh separat bewickelt und anschließend mit dem Statorrückschluß verbunden. Beispiele solcher mehrteiligen Statoren findet man z.B. in U.S. 6,359,335; WO 02/47238; U.S. 5,786,651; DE 198 42 948; EP 0 915 553; US 6,049,153; US 5,796,195; EP 1 014 536; WO 02/47240; US 6,555,942; und DE 101 43 870. Der Vorteil eines mehrteiligen Polschuhkörpers, bei dem insbesondere jeder Abschnitt einen Polschuh umfaßt, ist, daß jeder Polschuh so konfiguriert werden kann, daß er eine vorgefertigte Spule aufnimmt. Nach dem Aufbringen der Spulen auf die jeweiligen Polschuhe, werden die Stator-abschnitte miteinander verbunden und so angeordnet, daß sie zusammen mit dem Statorrückschluß einen ringförmigen Stator bilden. Das Aufbringen von Phasenwicklungen auf mehrteilige Statoranordnungen ist deutlich einfacher als die Bewicklung von herkömmlichen, einteiligen Statoranordnungen für Innenläufermotoren mit Hilfe der Nadelwickler. Die vorgefertigten Spulen müssen zwar in einem zusätzlichen Arbeitsschritt aufgebracht und verbunden werden, gleichwohl wird das Bewickeln der Statoren aufgrund der Möglichkeit der Verwendung vorgefertigter Spulen insgesamt einfacher und schneller sein.

Bei der Herstellung mehrteiligen Statoranordnungen ergibt sich das Problem, daß der Stator aus einer Vielzahl von Einzelteilen zusammengesetzt wird, die relativ zueinander richtig positioniert und verbunden werden müssen. Ferner ist es schwierig, mehrere Polschuhe gleichzeitig zu bewickeln, wenn sich eine Phasenwicklung über mehrere Polschuhe erstrecken soll.

Es ist die Aufgabe der Erfindung, eine Statoranordnung anzugeben, die möglichst einfach und zeitsparend aufgebaut und bewickelt werden kann.

Diese Aufgabe wird durch eine Statoranordnung mit den Merkmalen von Anspruch 1 gelöst. Die Erfindung sieht eine Statoranordnung für einen mehrphasigen Elektromotor und insbesondere für einen Innenläufermotor vor, die einen Träger und mehrere separate Polschuhkörper aufweist. Jeder Polschuhkörper umfaßt jeweils nur sämtliche Polschuhe einer Phase des Elektromotors, wobei die separaten Polschuhkörper an dem Träger derart angebracht sind, daß sie magnetisch voneinander getrennt sind. Erfindungsgemäß wird die Statoranordnung somit mehrteilig aufgebaut, jedoch nicht mit einzelnen Polschuhen, sondern mit separaten Polschuhkörpern, welche jeweils Polschuhe einer Phase umfassen. Jeder dieser Polschuhkörper kann vor dem Zusammenbau der Statoranordnung mit der Phasenwicklung der zugehörigen Phase versehen werden. Anschließend werden die Polschuhkörper mit dem Träger verbunden, wobei die einzelnen Polschuhkörper magnetisch voneinander getrennt sind. Dies ermöglicht die Verwendung eines Trägers aus Kunststoff oder einem anderen nicht magnetisch leitfähigen Material, wie Aluminium.

Die Herstellung der erfindungsgemäßen Statoranordnung ist im Vergleich zum Stand der Technik einfacher und kostengünstiger. Die Statoranordnung umfaßt beispielsweise bei einem dreiphasigen Elektromotor drei identische, separate Polschuhkörper. Diese Einzelteile können in einer größeren Stückzahl und folglich kostengünstiger hergestellt werden als die üblichen ringförmigen Polschuhkörper. Ferner sind die einzelnen Polschuhkörper einfacher zu bewickeln als ein ringförmiger Polschuhkörper, insbesondere wenn es sich bei dem Elektromotor um einen sehr kleinbauenden Innenläufer handelt. Auch bei einem Außenläufermotor kann der erfindungsgemäße Aufbau sinnvoll sein, insbesondere bei einem Außenläufer mit einem sehr großen Stator, weil bei großen Statoren einzelne Polschuhkörper besser handhabbar sind als ein vollständiger Statorring.

Der Träger dient der Positionierung und Halterung der einzelnen Polschuhkörper zur Bildung eines vollständigen Statorringes, wobei der Träger für einen Innenläufermotor als Außenring und für einen Außenläufermotor als Innenring ausgebildet sein kann. Der Träger hat nicht die Funktion eines magnetischen Rückschlusses und kann daher aus Kunststoff oder einem Metall ohne magnetische Eigenschaften gebildet sein. Der Träger kann ein Fertigbauteil sein, mit welchem die Polschuhkörper verbunden werden, oder ein Spritzgußteil sein, das auf die Polschuhkörper aufgespritzt wird. Der Träger kann beispielsweise auch durch eine Gehäusewand eines Innenläufermotors gebildet werden.

Die Polschuhkörper sind so aufgebaut, daß sie die Polschuhe einer Phase über einen zugeordneten magnetischen (Teil-)Rückschluß verbinden. In einer bevorzugten Ausführung umfaßt ein Polschuhkörper sämtliche Polschuhe einer Phase. Es ist jedoch auch möglich, mehrere Polschuhkörper pro Phase vorzusehen. In einer besonders bevorzugten Ausführung sieht die Erfindung einen Innenläufermotor mit mehreren Polschuhkörpern vor, wobei der Träger einen Außenring bildet, von dessen zentraler innerer Öffnung die Polschuhe nach innen abstehen. Dieser Außenring kann mit einer Gehäusewand des Innenläufermotors verbunden oder durch die Gehäusewand selbst gebildet sein. In einer besonders bevorzugten Ausführung ist zusätzlich ein Gehäusedeckel vorgesehen, der Vorsprünge aufweist, welche zwischen die einzelnen Polschuhkörper eingefügt sind, nachdem das Gehäuse mit dem Gehäusedeckel verschlossen wurde.

Die Herstellung der erfindungsgemäßen Statoranordnung ist somit einfacher und kostengünstiger als die Herstellung bekannter Statoranordnungen des Standes der Technik.

Die Herstellung der einzelnen Polschuhkörper ist aufgrund der höheren Stückzahlen kostengünstiger. Die Bewicklung der Polschuhkörper für einen Innenläufermotor ist einfacher. Insbesondere bei großen Außenläufermotoren ist die Handhabung der einzelnen Polschuhkörper einfacher als die Handhabung eines großen vollständigen Statorrings. Die Polschuhkörper sind vorzugsweise aus Blechpaketen aufgebaut. Durch die Aufteilung des Stators in mehrere Polschuhkörper ist es möglich, daß sämtliche Blechpakete die gleiche, optimierte Walzrichtung haben.

Versuche und Simulationen der Anmelderin haben gezeigt, daß ein Elektromotor mit der erfindungsgemäßen Statoranordnung voll funktionstüchtig ist, obwohl kein geschlossener Statorrückschluß vorgesehen ist, der die Polschuhe sämtlicher Phasen verbindet.

Die Erfindung ist im folgenden anhand einer bevorzugten Ausführung mit Bezug auf die Zeichnungen näher erläutert. In den Figuren zeigen:
- Fig. 1: eine Querschnittdarstellung durch einen Elektromotor gemäß einer bevorzugten Ausführung der Erfindung;
- Fig. 2: eine Längsschnittdarstellung durch den Elektromotor der Fig. 1 entlang der Linie S-S in Fig. 1;
- Fig. 3: eine schematische, perspektivische Darstellung der erfindungsgemäßen Statoranordnung;
- Fig. 4: eine Draufsicht auf ein einzelnes Blech eines Polschuhkörpers der erfindungsgemäßen Statoranordnung; und
- Fig. 5: eine schematische Darstellung des erfindungsgemäßen Elektromotors, in der die in dem Motor generierte Feldlinienverteilung illustriert ist.

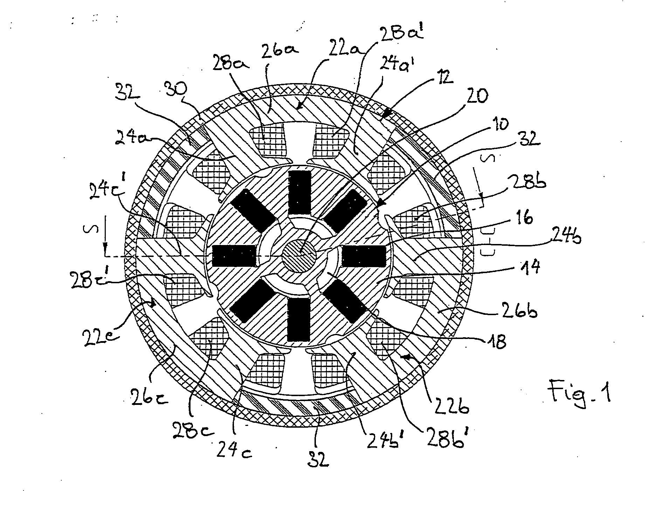

Fig. 1 zeigt eine Schnittdarstellung durch einen Innenläufermotor gemäß einer bevorzugten Ausführung der Erfindung. Der Motor umfaßt einen Rotor, der allgemein mit 10 bezeichnet ist, sowie eine Statoranordnung, die allgemein mit 12 bezeichnet ist. Der Rotor 10 weist einen Rotorkern 14 auf, in welchen Magnete 16 eingebettet sind. Die Magnete 16 sind beispielsweise Permanentmagnete, welche in entsprechende Schlitze in dem Rotorkern 14 eingeführt werden. Fig. 1 zeigt eine speichenförmige Anordnung der Magnete 16, wobei jeweils ein Permanentmagnetpaar durch eine Aussparung 18 in dem Rotorkern überbrückt ist. Der Fachmann wird verstehen, daß der erfindungsgemäße Elektromotor auch mit anderen Rotoranordnungen realisiert werden kann, insbesondere mit anderen Anordnungen der Permanentmagnete 10 sowie mit Rotoren, welche die Magnete auf ihrer Außenseite tragen. Der Rotor 10 ist auf eine Welle 20 aufgebracht.

Die Statoranordnung 12 umgibt den Rotor 10 koaxial, wobei ein Arbeitsluftspalt zwischen diesen frei bleibt.

Fig. 1 zeigt einen dreiphasigen Elektromotor. Entsprechend umfaßt die erfindungsgemäße Statoranordnung 12 drei Polschuhkörper 22a, 22b, 22c, welche bei der gezeigten Ausführung jeweils zwei Polschuhe 24a, 24a'; 24b, 24b'; 24c, 24c' aufweisen. Die Polschuhe 24a, 24a'; 24b, 24b'; 24c, 24c'eines Polschuhkörpers 22a, 22b, 22c sind jeweils über einen Rückschlußabschnitt 26a, 26b, 26c verbunden. Auf jeden Polschuh 24a, 24a'; 24b, 24b'; 24c, 24c' ist eine zugehörige Phasenwicklung 28a, 28a', 28b, 28b', 28c, 28c' aufgebracht. Die Wicklungen 28a, 28a'; 28b, 28b'; 28c, 28c' jeweils eines Polschuhkörpers 22a, 22b, 22c sind gegensinnig auf die jeweiligen Polschuhe 24a, 24a'; 24b, 24b'; 24c, 24c' aufgebracht. Die Polschuhkörper 22a, 22b, 22c werden bei der gezeigten Ausführungsform durch einen Außenring (Träger) 30 zusammengehalten, der durch eine Gehäusewand des Elektromotors gebildet wird. Bei der gezeigten Ausführung ist ferner der Elektromotor so ausgebildet, daß ein Gehäusedeckel Vorsprünge 32 aufweist, welche zwischen die Polschuhkörper 22a, 22b, 22c eingefügt werden, um diese zu positionieren und in ihrer Position zu halten.

Der erfindungsgemäße Elektromotor wird wie folgt aufgebaut. Zunächst werden die Polschuhkörper 22a, 22b, 22c beispielsweise in Form von Blechpaketen bereitgestellt. Für einen dreiphasigen Motor können drei oder mehr (z.B. sechs) identische Polschuhkörper vorgesehen werden, wobei auch die Walzrichtung der Blechstapel gleich sein kann. Anschließend werden die Polschuhe 24a, 24a'; 24b, 24b', 24c, 24c' mit den Phasenwicklungen 28a, 28a'; 28b, 28b'; 28c, 28c' versehen, wobei die Polschuhe jeweils entgegengesetzt bewickelt werden. Zu diesem Zweck können sogenannte Flyer-Wickler oder andere schnelle Wickelmaschinen eingesetzt werden. Je nach Ausbildung der Polschuhe ist es auch denkbar, vorgefertigte Spulen auf diese aufzubringen. Anschließend werden die Polschuhkörper 22a, 22b, 22c an einem Träger angebracht. Beispielsweise werden sie mit einer Gehäusewand 30 des Elektromotors oder mit einem anderen Außenring verklebt, formschlüssig oder auf andere Weise mit diesem verbunden. Es ist auch möglich, einen Träger an die Polschuhkörper 22a, 22b, 22c anzuspritzen. Bei der gezeigten Ausführung werden die Polschuhkörper in der Gehäusewand 30 des Elektromotors gehalten und mit Hilfe der Vorsprünge 32 des Gehäusedeckels positioniert. Die Rotoranordnung 10 mit der Welle 20 kann dann in den Stator eingefügt werden.

Fig. 2 zeigt eine Längsschnittdarstellung durch den erfindungsgemäßen Elektromotor, wobei korrespondierende Teile mit denselben Bezugszeichen gekennzeichnet und nicht nochmals im einzelnen beschrieben sind.

Die in Fig. 2 gezeigte Längsschnittdarstellung durch den erfindungsgemäßen Elektromotor läßt den Rotor 10 erkennen, der auf die Welle 20 aufgebracht und wie in Fig. 1 gezeigt aufgebaut ist. Der Rotor 10 ist in die Statoranordnung 12 eingefügt, welche in Fig. 2 mit Statorpolen 24b, 24c' und Wicklungen 28b, 28c' dargestellt ist. Sowohl die Polschuhkörper 22a, 22b, 22c als auch der Rotorkern 14 sind bei der gezeigten Ausführung als Blechpakete aufgebaut. Die Statoranordnung 12 und der Rotor 10 sind von einer Gehäusewand 30 umschlossen, die auch als Träger für die Statoranordnung dient. Das Gehäuse ist an seinen beiden Stirnenden durch einen ersten und einen zweiten Gehäusedeckel 34, 36 verschlossen. Die Gehäusedeckel 34, 36 dienen gleichzeitig als Lagerschild; sie könnten auch als Flansche ausgebildet sein. Der Gehäusedeckel 34 umfaßt die mit Bezug auf Fig. 1 beschriebenen Vorsprünge 32, welche zwischen den einzelnen Polschuhkörpern 22a, 22b, 22c zu liegen kommen, um diese in Umfangsrichtung der Statoranordnung zu positionieren und in ihre Position zu halten.

Die Rotorwelle 20 ist in den Gehäusedeckeln oder Lagerschilden 34, 36 über Lager 38, 40 drehbar gelagert und gehalten. In Fig. 2 ist ferner eine Rotornabe 42 dargestellt, welche einen Steuermagneten 66 für die Erfassung der Rotorlage trägt. Dem Steuermagnet 66 gegenüberliegend ist ein Sensor 68 angeordnet, um aus der Rotorlage z.B. Kommutierungssignale abzuleiten.

Die in Fig. 2 dargestellte Ausführung des Elektromotors ist lediglich ein Beispiel für die Verwendung der erfindungsgemäßen Statoranordnung, wobei ein Fachmann verstehen wird, daß die verschiedenen Komponenten, insbesondere der Rotor, die Lagerschilde, die Lager und das Gehäuse des Motors gänzlich anders gestaltet sein können. Die Halterung der Statoranordnung muß nicht durch das Gehäuse des Elektromotors gebildet werden, sondern kann durch ein separates Bauteil und insbesondere auch durch ein Spritzgußteil erfolgen. Erfindungsgemäß ist der Träger 30 aus einem nicht magnetisch wirksamen Material, wie Kunststoff oder Aluminium, hergestellt.

Wie oben erläutert, ist die Erfindung auch bei einem Außenläufermotor einsetzbar, wobei dann die Polschuhkörper nach außen abstehende Polschuhe aufweisen, welche durch einen Träger in Form eines Innenrings miteinander verbunden sind. Wesentlich bei der Erfindugn ist, daß die einzelnen Polschuhkörper, die unterschiedlichen Phasen zugeordnet sind, magnetisch nicht gekoppelt sind und insbesondere keinen gemeinsamen magnetischen Rückschluß aufweisen. Dadurch wird der Aufbau der Statoranordnung im Vergleich zum Stand der Technik wesentlich vereinfacht und gleichwohl ein funktionstüchtiger Elektromotor erreicht.

Die erfindungsgemäße Statoranordnung für einen Innenläufermotor ist mit Bezug auf die Fig. 3 und 4 weiter verdeutlicht. Fig. 3 zeigt eine teilweise auseinander gezogene perspektivische Darstellung der Statoranordnung, und Fig. 4 zeigt eine Draufsicht auf einen Blechschnitt zur Herstellung eines Polschuhkörpers gemäß der Erfindung.

Fig. 3 zeigt drei Polschuhkörper 44, 46, 48 mit jeweils zwei Polschuhen 50, 50'; 52, 52'; 54, 54' und darauf aufgebrachten Phasenwicklungen 56, 56'; 58, 58'; 60, 60', die in einem Träger 62 gehalten sind. Fig. 4 zeigt eine Draufsicht auf einen Blechschnitt 64 zur Herstellung eines Blechpakets für einen der Polschuhkörper 44, 46, 48.

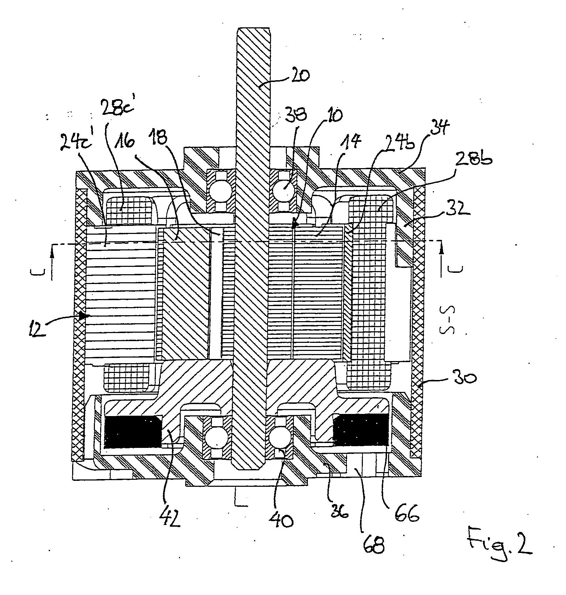

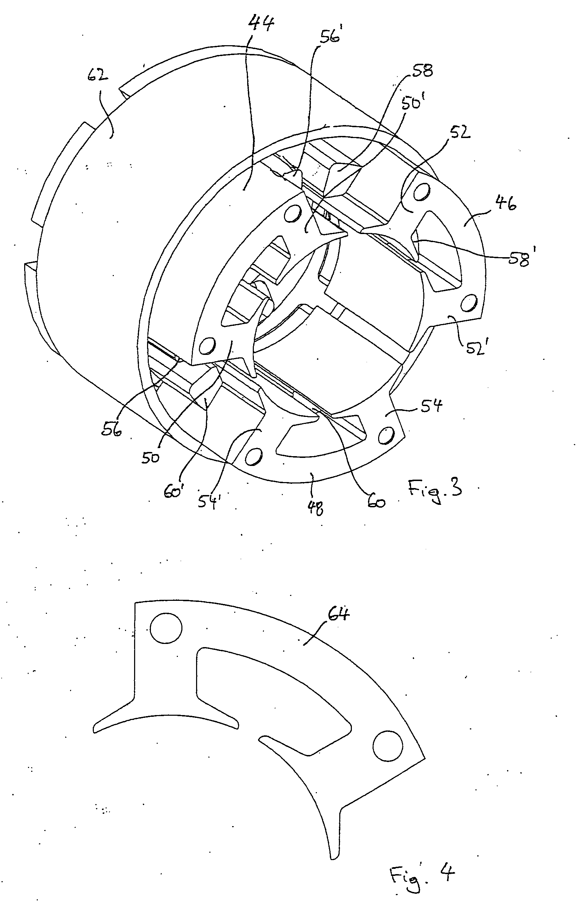

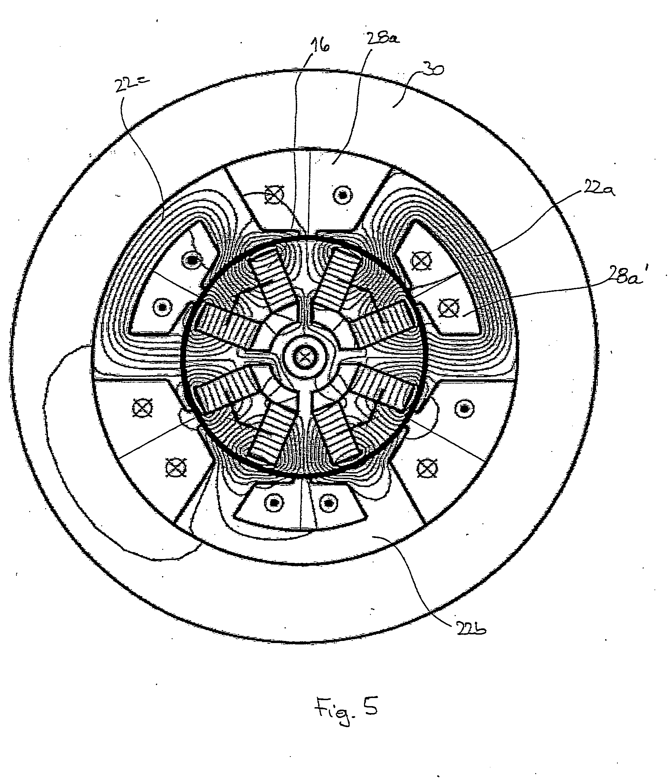

Fig. 5 ist eine schematische Schnittdarstellung durch einen Innenläufermotor gemäß der Erfindung, der ähnlich wie der in Fig. 1 gezeigte Motor aufgebaut ist. Die Magnetisierungsrichtungen der Magnete 16 sind durch Pfeile dargestellt, und die Richtung der Bestromung der Phasenwicklungen 28 ist durch Punkte bzw. Kreuze gekennzeichnet. In Fig. 5 sind ähnliche Bauteile wie in Fig. 1 mit korrespondierenden Bezugszeichen bezeichnet, wobei für eine bessere Übersichtlichkeit einige Bezugszeichen weggelassen sind. Aus Fig. 5 wird deutlich, daß mit der erfindungsgemäßen Statoranordnung ein Elektromotor aufgebaut werden kann, der nicht nur funktionstüchtig ist, sondern eine ausgezeichnete Feldlinienverteilung mit einem minimalen Streufluß erzielt.

Die in der vorstehenden Beschreibung, den Ansprüchen und den Figuren offenbarten Merkmale können sowohl einzeln als auch in beliebiger Kombination für die Verwirklichung der Erfindung in ihren verschiedenen Ausführungsform von Bedeutung sein.

### Bezugszeichenliste

- 10: Rotor
- 12: Statoranordnung
- 14: Rotorkern
- 16: Magnete
- 18: Aussparung
- 20: Welle
- 22a, 22b, 22c: Polschuhkörper
- 24a, 24b, 24c 24a', 24b', 24c': Polschuhe
- 26a, 26b, 26c: Rückschlußabschnitt
- 28a, 28b, 28c 28a', 28b', 28c': Phasenwicklungen
- 30: Träger; Gehäusewand
- 32: Vorsprünge
- 34,36: Gehäusedeckel
- 38,40: Lager
- 42: Rotornabe
- 44, 46, 48: Polschuhkörper
- 50, 50'; 52, 52'; 54, 54': Polschuhe
- 56, 56'; 58, 58'; 60, 60': Phasenwicklungen
- 62: Träger
- 64: Blechschnitt
- 66: Steuermagnet
- 68: Sensor

## Patentansprüche

1. Statoranordnung (12) für einen mehrphasigen Elektromotor, umfassend einen Träger (30) und mehrere separate Polschuhkörper (22a, 22b, 22c), wobei jeder Polschuhkörper (22a, 22b, 22c) jeweils nur Polschuhe (24a, 24a'; 24b, 24b'; 24c, 24c') einer Phase des Elektromotors umfaßt, und wobei die Polschuhkörper (22a, 22b, 22c) an dem Träger (30) derart angebracht sind, daß die einzelnen Polschuhkörper (22a, 22b, 22c) magnetisch voneinander getrennt sind.

2. Statoranordnung nach Anspruch 1, **dadurch gekennzeichnet, daß** die Polschuhe (24a, 24a'; 24b, 24b'; 24c, 24c') jeweils eines Polschuhkörpers nebeneinander liegen.

3. Statoranordnung nach Anspruch 1 oder 2, **dadurch gekennzeichnet, daß** die separaten Polschuhkörper (22a, 22b, 22c) vor dem Verbinden mit dem Träger (30) mit einer Phasenwicklung (28a, 28a'; 28b, 28b'; 28c, 28c') bewickelt sind.

4. Statoranordnung nach einem der vorangehenden Ansprüche, **dadurch gekennzeichnet, daß** die separaten Polschuhkörper (22a, 22b, 22c) mit jeweils einem Draht bewickelt sind.

5. Statoranordnung nach einem der vorangehenden Ansprüche, **dadurch gekennzeichnet, daß** jeweils ein Polschuhkörper (22a, 22b, 22c) sämtliche Polschuhe (24a, 24a'; 24b, 24b'; 24c, 24c') einer Phase des Elektromotors umfaßt.

6. Statoranordnung nach einem der vorangehenden Ansprüche, **dadurch gekennzeichnet, daß** der Träger (30) aus einem nicht-magnetischen Material, insbesondere Kunststoff, hergestellt ist.

7. Statoranordnung nach einem der vorangehenden Ansprüche, **dadurch gekennzeichnet, daß** jeder Polschuhkörper (22a, 22b, 22c) einen die Polschuhe (24a, 24a'; 24b, 24b'; 24c, 24c') der jeweiligen Phase verbindenden magnetischen Rückschluß aufweist.

8. Innenläufermotor mit einem Polschuhkörper nach einem der vorangehenden Ansprüche, **dadurch gekennzeichnet, daß** der Träger (30) ringförmig ist und eine zentrale innere Öffnung aufweist, und daß die Polschuhe (24a, 24a'; 24b, 24b'; 24c, 24c') von der zentralen inneren Öffnung des Trägers nach innen abstehen.

9. Innenläufermotor nach Anspruch 8, **dadurch gekennzeichnet, daß** der Träger (30) für die Polschuhkörper (22a, 22b, 22c) durch eine Gehäusewand des Innenläufermotors gebildet ist.

10. Innenläufermotor nach Anspruch 9, **dadurch gekennzeichnet, daß** die den Träger (30) bildende Gehäusewand mit einem Gehäusedeckel verbunden ist, der Vorsprünge (32) aufweist, die zwischen die einzelnen Polschuhkörper (22a, 22b, 22c) eingefügt sind.
